# EUROPEAN PATENT APPLICATION

(11) **EP 4 583 097 A1**
(43) Date of publication of application: **09.07.2025**
(21) Application number: 24176693.0
(22) Date of filing: 17.05.2024
(51) Int. Cl.: G09G 5/10

(54) **IMAGE DISPLAY APPARATUS**

(30) Priority: 02.01.2024 KR 20240000512
(71) Applicant: LG Electronics Inc., Yeongdeungpo-gu Seoul 07336 (KR)
(72) Inventor: KIM, Hyomin, 06772 Seoul (KR); LEE, Chanho, 06772 Seoul (KR)
(74) Representative: Vossius & Partner Patentanwälte Rechtsanwälte mbB

(57) **Abstract**

An image display apparatus is disclosed. The image display apparatus according to an embodiment of the present disclosure includes: a display; and a signal processing device to output an image signal to the display, wherein, in response to an input peak luminance of an input image being equal to or lower than a reference peak luminance, the signal processing device is configured to perform third tone mapping, based on a combination of first tone mapping corresponding to the input peak luminance and second tone mapping corresponding to the reference peak luminance, and output a signal corresponding to the third tone mapping. Accordingly, grayscale expression can be enhanced.

## Description

### BACKGROUND

### 1. Field

The present disclosure relates to an image display apparatus, and more particularly, to an image display apparatus capable of enhancing grayscale expression.

### 2. Description of the Related Art

An image display apparatus is an apparatus with the function of providing images that can be viewed by the user. The user can view various images through the image display apparatus.

In line with the trend toward image display apparatuses with larger panels and higher resolutions, attempts are being made to enhance the ability to express the luminance of images.

For example, there are attempts to highlight the contrast between dark parts and bright parts of an image, in order to display images based on high dynamic range (HDR).

### SUMMARY

An object of the present disclosure is to provide an image display apparatus capable of enhancing grayscale expression.

Another object of the present disclosure is to provide an image display apparatus capable of enhancing the grayscale expression of mid and high gray levels.

In accordance with one embodiment of the present disclosure, the above and other objects may be accomplished by the provision of an image display apparatus comprising: a display; and a signal processing device to output an image signal to the display, wherein, in response to an input peak luminance of an input image being equal to or lower than a reference peak luminance, the signal processing device is configured to perform third tone mapping, based on a combination of first tone mapping corresponding to the input peak luminance and second tone mapping corresponding to the reference peak luminance, and output a signal corresponding to the third tone mapping.

Meanwhile, when combining together the first tone mapping and the second tone mapping, the signal processing device may be configured to increase the ratio of the first tone mapping to the second tone mapping as the gray level of the input image increases.

Meanwhile, in response to the gray level of the input image being equal to or lower than a first gray level, the signal processing device may be configured to perform the third tone mapping based on the second tone mapping, and in response to the gray level of the input image being between the first gray level and the input peak luminance, the signal processing device may be configured to perform the third tone mapping based on a combination of the first tone mapping and the second tone mapping.

Meanwhile, in response to the gray level of the input image being the input peak luminance, the signal processing device may be configured to convert the gray level into a set gray level.

Meanwhile, the signal processing device may be configured to change the set gray level based on a set input.

Meanwhile, the signal processing device may be configured to change the reference peak based on a set input.

Meanwhile, the signal processing device may be configured to increase the amount of luminance change for the third tone mapping as the difference between the input peak luminance and the reference peak luminance increases or the input peak luminance decreases in a state in which the input peak luminance of the input image is equal to or lower than the reference peak luminance.

Meanwhile, in response to the gray level of the input image being equal to or lower than a first gray level, the signal processing device may be configured to perform the third tone mapping based on the second tone mapping, and in response to the gray level of the input image being between the first gray level and the input peak luminance, the signal processing device may be configured to perform the third tone mapping based on a combination of the first tone mapping and the second tone mapping, and increase the amount of luminance change for the third tone mapping as the difference between the input peak luminance and the reference peak luminance increases or the input peak luminance decreases.

Meanwhile, in response to the input peak luminance of the input image being higher than a second reference peak luminance, the signal processing device may be configured to perform sixth tone mapping based on a combination of fourth tone mapping corresponding to the input peak luminance and fifth tone mapping corresponding to the second reference peak luminance, and output signal corresponding to the sixth tone mapping.

Meanwhile, when combining together the fourth tone mapping and the fifth tone mapping, the signal processing device may be configured to increase the ratio of the fourth tone mapping to the fifth tone mapping as the gray level of the input image increases.

Meanwhile, in response to the gray level of the input image being equal to or lower than a second gray level, the signal processing device may be configured to perform the sixth tone mapping based on the fifth tone mapping, and in response to the gray level of the input image being between the second gray level and the input peak luminance, the signal processing device may be configured to perform the sixth tone mapping based a combination of the fourth tone mapping and the fifth tone mapping.

Meanwhile, the signal processing device may be configured to decrease the amount of luminance change for the sixth tone mapping as the difference between the input peak luminance and the second reference peak luminance increases or the input peak luminance increases in a state in which the input peak luminance of the input image is higher than the reference peak luminance.

Meanwhile, in response to the gray level of the input image being equal to or lower than a second gray level, the signal processing device may be configured to perform the sixth tone mapping based on the fifth tone mapping, and in response to the gray level of the input image being between the second gray level and the input peak luminance, the signal processing device may be configured to perform the sixth tone mapping based on a combination of the fourth tone mapping and the fifth tone mapping, and decrease the amount of luminance change for the sixth tone mapping as the difference between the input peak luminance and the second reference peak luminance increases or the input peak luminance increases.

Meanwhile, in response to receiving a first input image corresponding to a first input peak, the signal processing device is configured to perform the third tone mapping to output the first input image after converting the first input peak into a set luminance, and in response to receiving a second input image corresponding to a second input peak higher than the first input peak, the signal processing device may be configured to perform the third tone mapping to convert the second input peak into a set luminance and output the second input image after converting the first input peak into a first luminance lower than the set luminance.

Meanwhile, in response to receiving a third input image corresponding to a third input peak higher than the second input peak, the signal processing device may be configured to perform the third tone mapping to convert the third input peak into a set luminance and output the third input image after converting the first input peak into a second luminance lower than the first luminance.

Meanwhile, in response to receiving a fourth input image corresponding to a fourth input peak, the signal processing device may be configured to perform the sixth tone mapping to output the fourth input image after converting the fourth input peak into a set luminance, and in response to receiving a fifth input image corresponding to a fifth input peak higher than the fourth input peak, the signal processing device may be configured to perform the sixth tone mapping to convert the fifth input peak into a set luminance and output the fifth input image after converting the fourth input peak into a third luminance lower than the set luminance.

Meanwhile, in response to receiving a sixth input image corresponding to a sixth input peak higher than the fifth input peak, the signal processing device is configured to perform the sixth tone mapping to convert the sixth input peak into the set luminance and output the sixth input image after converting the fourth input peak into a fourth luminance lower than the third luminance.

In accordance with another embodiment of the present disclosure, the above and other objects may be accomplished by the provision of an image display apparatus comprising: a display; and a signal processing device to output an image signal to the display, wherein, in response to an input peak luminance of an input image being higher than a reference peak luminance, the signal processing device is configured to perform third tone mapping, based on a combination of first tone mapping corresponding to the input peak luminance and second tone mapping corresponding to the reference peak luminance, and output a signal corresponding to the third tone mapping.

In accordance with yet another embodiment of the present disclosure, the above and other objects may be accomplished by the provision of an image display apparatus comprising: a display; and a signal processing device to output an image signal to the display, wherein, in response to receiving a first input image corresponding to a first input peak, the signal processing device is configured to perform tone mapping to output the first input image after converting the first input peak into a set luminance, and in response to receiving a second input image corresponding to a second input peak higher than the first input peak, the signal processing device is configured to perform the tone mapping to convert the second input peak into a set luminance and output the second input image after converting the first input peak into a first luminance lower than the set luminance.

Meanwhile, in response to receiving a third input image corresponding to a third input peak higher than the second input peak, the signal processing device may be configured to perform the third tone mapping to convert the third input peak into a set luminance and output the third input image after converting the first input peak into a second luminance lower than the first luminance.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a diagram showing an image display apparatus according to an embodiment of the present disclosure;
FIG. 2 is an example of an internal block diagram of the image display apparatus;
FIG. 3 is an example of an internal block diagram of a signal processing device of FIG. 2;
FIG. 4A is a diagram showing a method of controlling a remote controller of FIG. 2;
FIG. 4B is an internal block diagram of the remote controller of FIG. 2;
FIG. 5 is an internal block diagram of a display of FIG. 2;
FIGS. 6A and 6B are diagrams referred to in the description of an organic light emitting panel of FIG. 5;
FIG. 7 is a sequential chart showing an exemplary method of operating an image display apparatus related to the present disclosure;
FIGS. 8A to 8C are views referred to in describing FIG. 7.
FIG. 9 is a sequential chart showing an example of a method of operating an image display apparatus according to an embodiment of the present disclosure.
FIGS. 10A to 13 are views referred to in describing the operation method in FIG. 9.

### DETAILED DESCRIPTION OF THE PREFERRED EMBODIMENTS

Hereinafter, the present disclosure will be described in detail with reference to the accompanying drawings.

Regarding constituent elements used in the following description, suffixes "module" and "unit" are given only in consideration of ease in the preparation of the specification, and do not have or serve as different meanings. Accordingly, the suffixes "module" and "unit" may be used interchangeably.

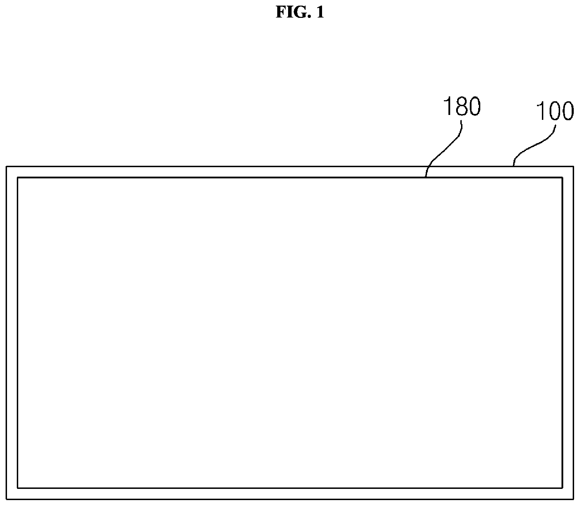

FIG. 1 is a diagram showing an image display apparatus according to an embodiment of the present disclosure.

Referring to the figure, an image display apparatus 100 may include a display 180.

Meanwhile, the display 180 may be implemented by one of various panels. For example, the display 180 may be one of a liquid crystal display panel (LCD panel), an organic light emitting panel (OLED panel), and an inorganic light emitting panel (LED panel).

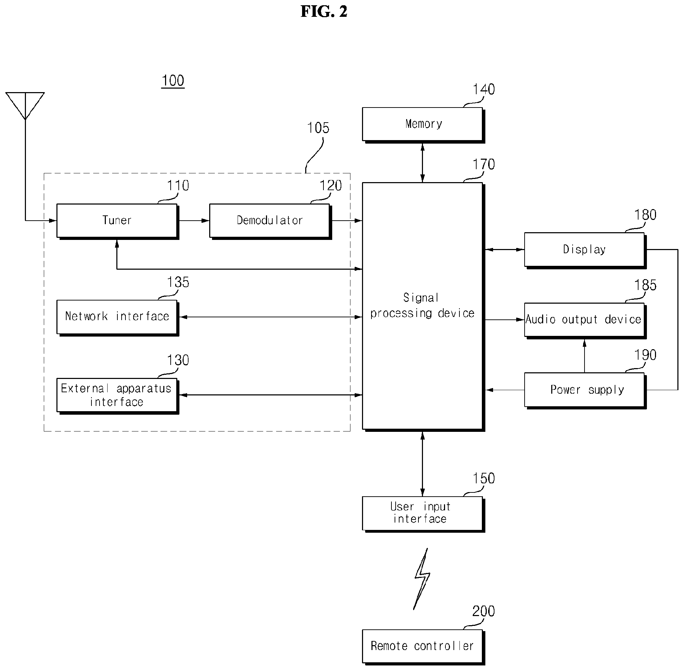

The image display apparatus 100 according to an embodiment of the present disclosure includes a display 180 and a signal processing device (170 of FIG. 2) for outputting an image signal to the display 180, and, if an input peak luminance Pkba of an input image is equal to or lower than a reference peak luminance Pkbb, the signal processing device 170 is configured to perform third tone mapping and output a signal corresponding to the third tone mapping, based on a combination of first tone mapping corresponding to the input peak luminance Pkba and second tone mapping corresponding to the reference peak luminance Pkbb. Accordingly, grayscale expression can be enhanced. In particular, the grayscale expression of mid and high gray levels can be enhanced.

Meanwhile, the image display apparatus 100 according to another embodiment of the present disclosure includes a display 180 and a signal processing device (170 of FIG. 2) for outputting an image signal to the display 180, and, if an input peak luminance Pkab of an input image is higher than a reference peak luminance Pkaa, the signal processing device 170 is configured to perform third tone mapping and output a signal corresponding to the third tone mapping, based on a combination of first tone mapping corresponding to the input peak luminance Pkab and second tone mapping corresponding to the reference peak luminance Pkaa. Accordingly, grayscale expression can be enhanced. In particular, the grayscale expression of mid and high gray levels can be enhanced.

Meanwhile, the image display apparatus 100 according to another embodiment of the present disclosure includes a display 180 and a signal processing device (170 of FIG. 2) for outputting an image signal to the display 180, and, if a first input image corresponding to a first input peak is inputted, the signal processing device 170 is configured to perform tone mapping and output the first input image after converting the first input peak into a set luminance, and if a second input image corresponding to a second input peak higher than the first input peak is inputted, the signal processing device 170 is configured to perform tone mapping to convert the second input peak into a set luminance and output the second input image after converting the first input peak into a first luminance lower than the set luminance. Accordingly, grayscale expression can be enhanced, corresponding to the input peak of the input image. In particular, the grayscale expression of mid and high gray levels can be enhanced.

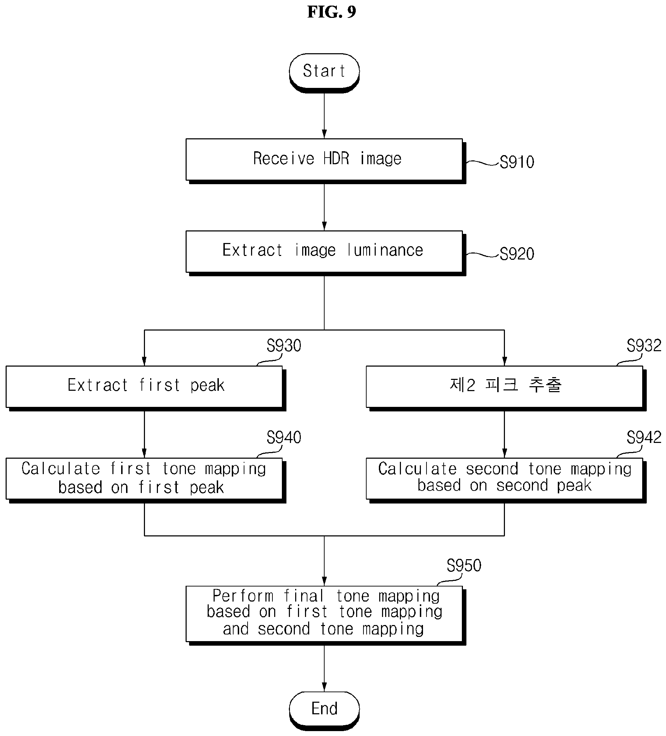

Various methods of operating the above described image display apparatus 100 will be described in more detail with reference to FIG. 9 and the subsequent drawings.

Meanwhile, the image display apparatus 100 in FIG. 1 may be a TV, a monitor, a tablet PC, a mobile terminal, a vehicle display, or the like.

FIG. 2 is an example of an internal block diagram of the image display apparatus of FIG. 1.

Referring to FIG. 2, the image display apparatus 100 according to an embodiment of the present disclosure includes an image receiver 105, an external apparatus interface 130, a memory 140, a user input interface 150, a sensor device (not shown), a signal processing device 170, a display 180, and an audio output device 185.

The image receiver 105 may include a tuner 110, a demodulator 120, a network interface 135, and an external apparatus interface 130.

Meanwhile, unlike the figure, the image receiver 105 may include only the tuner 110, the demodulator 120, and the external apparatus interface 130. That is, the network interface 135 may not be included.

The tuner 110 selects an RF broadcast signal corresponding to a channel selected by a user or all pre-stored channels among radio frequency (RF) broadcast signals received through an antenna (not shown). In addition, the selected RF broadcast signal is converted into an intermediate frequency signal, a baseband image, or an audio signal.

For example, if the selected RF broadcast signal is a digital broadcast signal, the tuner 110 is configured to change the digital broadcast signal into a digital IF (DIF) signal and, if the selected RF broadcast signal is an analog broadcast signal, the tuner 110 is configured to change the analog broadcast signal into an analog baseband image or voice (CVBS/SIF) signal. That is, the tuner 110 may process a digital broadcast signal or an analog broadcast signal. The analog baseband image or voice (CVBS/SIF) signal output from the tuner 110 may be directly input to the signal processing device 170.

Meanwhile, the tuner 110 may include a plurality of tuners for receiving broadcast signals of a plurality of channels. Alternatively, a single tuner that simultaneously receives broadcast signals of a plurality of channels is also available.

The demodulator 120 receives the converted digital IF signal DIF from the tuner 110 and performs a demodulation operation.

The demodulator 120 may be configured to perform demodulation and channel decoding and then output a stream signal TS. At this time, the stream signal may be a multiplexed signal of an image signal, an audio signal, or a data signal.

The stream signal output from the demodulator 120 may be input to the signal processing device 170. The signal processing device 170 is configured to perform demultiplexing, image/audio signal processing, and the like, and then outputs an image to the display 180 and output audio to the audio output device 185.

The external apparatus interface 130 may transmit or receive data with a connected external apparatus (not shown), e.g., a set-top box 50. To this end, the external apparatus interface 130 may include an A/V input and output device (not shown).

The external apparatus interface 130 may be connected in wired or wirelessly to an external apparatus, such as a digital versatile disk (DVD), a Blu ray, a game equipment, a camera, a camcorder, a computer (note book), and a set-top box, and may be configured to perform an input/output operation with an external apparatus.

The A/V input and output device may receive image and audio signals from an external apparatus. Meanwhile, a wireless transceiver (not shown) may be configured to perform short-range wireless communication with other electronic apparatus.

Through the wireless transceiver (not shown), the external apparatus interface 130 may exchange data with an adjacent mobile terminal 600. In particular, in a mirroring mode, the external apparatus interface 130 may receive device information, executed application information, application image, and the like from the mobile terminal 600.

The network interface 135 provides an interface for connecting the image display apparatus 100 to a wired/wireless network including the Internet network. For example, the network interface 135 may receive, via the network, content or data provided by the Internet, a content provider, or a network operator.

Meanwhile, the network interface 135 may include a wireless transceiver (not shown).

The memory 140 may store a program for each signal processing and control in the signal processing device 170, and may store signal-processed image, audio, or data signal.

In addition, the memory 140 may serve to temporarily store image, audio, or data signal input to the external apparatus interface 130. In addition, the memory 140 may store information on a certain broadcast channel through a channel memory function, such as a channel map.

Although FIG. 2 illustrates that the memory is provided separately from the signal processing device 170, the scope of the present disclosure is not limited thereto. The memory 140 may be included in the signal processing device 170.

The user input interface 150 transmits a signal input by the user to the signal processing device 170 or transmits a signal from the signal processing device 170 to the user.

For example, it may transmit/receive a user input signal, such as power on/off, channel selection, screen setting, etc., from a remote controller 200, may transfer a user input signal input from a local key (not shown), such as a power key, a channel key, a volume key, a set value, etc., to the signal processing device 170, may transfer a user input signal input from a sensor device (not shown) that senses a user's gesture to the signal processing device 170, or may transmit a signal from the signal processing device 170 to the sensor device (not shown).

The signal processing device 170 may demultiplex the input stream through the tuner 110, the demodulator 120, the network interface 135, or the external apparatus interface 130, or process the demultiplexed signals to generate and output a signal for image or audio output.

The image signal processed by the signal processing device 170 is input to the display 180, and may be displayed as an image corresponding to the image signal. In addition, the image signal processed by the signal processing device 170 may be input to the external output apparatus through the external apparatus interface 130.

The audio signal processed by the signal processing device 170 may be output to the audio output device 185 as an audio signal. In addition, audio signal processed by the signal processing device 170 may be input to the external output apparatus through the external apparatus interface 130.

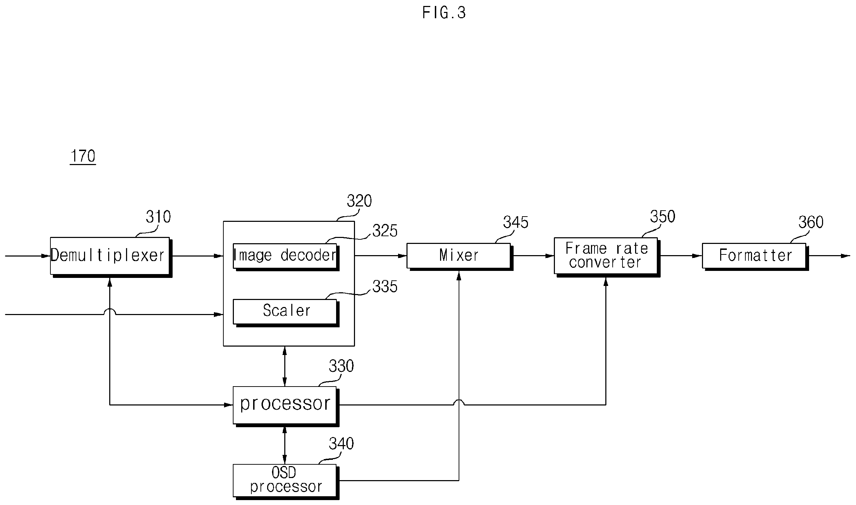

Although not shown in FIG. 2, the signal processing device 170 may include a demultiplexer, an image processor, and the like. This will be described later with reference to FIG. 3.

In addition, the signal processing device 170 may be configured to control the overall operation of the image display apparatus 100. For example, the signal processing device 170 may be configured to control the tuner 110 to control the tuning of the RF broadcast corresponding to the channel selected by the user or the previously stored channel.

In addition, the signal processing device 170 may be configured to control the image display apparatus 100 according to a user command input through the user input interface 150 or an internal program.

Meanwhile, the signal processing device 170 may be configured to control the display 180 to display an image. At this time, the image displayed on the display 180 may be a still image or a moving image, and may be a 2D image or a 3D image.

Meanwhile, the signal processing device 170 may display a certain object in an image displayed on the display 180. For example, the object may be at least one of a connected web screen (newspaper, magazine, etc.), an electronic program guide (EPG), various menus, a widget, an icon, a still image, a moving image, and a text.

Meanwhile, the signal processing device 170 may recognize the position of the user based on the image photographed by a photographing device (not shown). For example, the distance (z-axis coordinate) between a user and the image display apparatus 100 may be determined. In addition, the x-axis coordinate and the y-axis coordinate in the display 180 corresponding to a user position may be determined.

The display 180 generates a driving signal by converting an image signal, a data signal, an OSD signal, a control signal processed by the signal processing device 170, an image signal, a data signal, a control signal, and the like received from the external apparatus interface 130.

Meanwhile, the display 180 may be configured as a touch screen and used as an input device in addition to an output device.

The audio output device 185 receives a signal processed by the signal processing device 170 and output it as an audio.

The photographing device (not shown) photographs a user. The photographing device (not shown) may be implemented by a single camera, but the present disclosure is not limited thereto and may be implemented by a plurality of cameras. Image information photographed by the photographing device (not shown) may be input to the signal processing device 170.

The signal processing device 170 may sense a gesture of the user based on each of the images photographed by the photographing device (not shown), the signals detected from the sensor device (not shown), or a combination thereof.

The power supply 190 supplies corresponding power to the image display apparatus 100. Particularly, the power may be supplied to a signal processing device 170 which may be implemented in the form of a system on chip (SOC), a display 180 for displaying an image, and an audio output device 185 for outputting an audio.

Specifically, the power supply 190 may include a converter to convert an AC power into a DC voltage, and a DC/DC converter to convert the level of the DC voltage.

The remote controller 200 transmits the user input to the user input interface 150. To this end, the remote controller 200 may use Bluetooth, a radio frequency (RF) communication, an infrared (IR) communication, an Ultra Wideband (UWB), ZigBee, or the like. In addition, the remote controller 200 may receive the image, audio, or data signal output from the user input interface 150, and display it on the remote controller 200 or output it as an audio.

Meanwhile, the image display apparatus 100 may be a fixed or mobile digital broadcast receiver capable of receiving digital broadcast.

Meanwhile, a block diagram of the image display apparatus 100 shown in FIG. 2 is a block diagram for an embodiment of the present disclosure. Each component of the block diagram may be integrated, added, or omitted according to a specification of the image display apparatus 100 actually implemented. That is, two or more components may be combined into a single component as needed, or a single component may be split into two or more components. The function performed in each block is described for the purpose of illustrating embodiments of the present disclosure, and specific operation and apparatus do not limit the scope of the present disclosure.

FIG. 3 is an example of an internal block diagram of the signal processing device in FIG. 2.

Referring to the figure, the signal processing device 170 according to an embodiment of the present disclosure may include a demultiplexer 310, an image processor 320, a processor 330, an OSD processor 340, a mixer 345, a frame rate converter 350, and a formatter 360. Besides, the signal processing device 170 may further include an audio processor (not shown) and a data processor (not shown).

The demultiplexer 310 demultiplexes the input stream. For example, when an MPEG-2 TS is input, it may be demultiplexed into image, audio, and data signal, respectively. Here, the stream signal input to the demultiplexer 310 may be a stream signal output from the tuner 110, the demodulator 120, or the external apparatus interface 130.

The image processor 320 may be configured to perform image processing on a demultiplexed image signal. To this end, the image processor 320 may include an image decoder 325 and a scaler 335.

The image decoder 325 decodes a demultiplexed image signal, and the scaler 335 performs scaling so that the resolution of the decoded image signal may be output from the display 180.

The image decoder 325 may include a decoder of various standards. For example, a 3D image decoder for MPEG-2, H.264 decoder, a color image, and a depth image, and a decoder for a multiple view image may be provided.

The processor 330 may be configured to control the overall operation of the image display apparatus 100 or the signal processing device 170. For example, the processor 330 may be configured to control the tuner 110 to tune in to an RF broadcast corresponding to a channel selected by a user or a presorted channel.

In addition, the processor 330 may be configured to control the image display apparatus 100 according to a user command input through the user input interface 150 or an internal program.

Further, the processor 330 may be configured to control data transmission with the network interface 135 or the external apparatus interface 130.

In addition, the processor 330 may be configured to control operations of the demultiplexer 310, the image processor 320, the OSD processor 340, and the like in the signal processing device 170.

The OSD processor 340 generates an OSD signal according to a user input or by itself. For example, based on a user input signal, the OSD processor 340 may generate a signal for displaying various information as a graphic or a text on the screen of the display 180. The generated OSD signal may include various data, such as a user interface screen of the image display apparatus 100, various menu screens, a widget, and an icon. In addition, the generated OSD signal may include a 2D object or a 3D object.

In addition, the OSD processor 340 may generate a pointer that may be displayed on the display, based on a pointing signal input from the remote controller 200. In particular, such a pointer may be generated by a pointing signal processing device, and the OSD processor 340 may include such a pointing signal processing device (not shown). Obviously, the pointing signal processing device (not shown) may be provided separately from the OSD processor 340.

The mixer 345 may mix the OSD signal generated by the OSD processor 340 with the decoded image signal processed by the image processor 320. The mixed signal is provided to the frame rate converter 350.

The frame rate converter (FRC) 350 may be configured to convert a frame rate of an input image. Meanwhile, the frame rate converter 350 may output the input image without converting the frame rate.

Meanwhile, the formatter 360 may change a format of an input image signal into a format suitable for displaying the image signal on a display and output the image signal in the changed format.

Further, the formatter 360 may change the format of an image signal. For example, the formatter 360 may change the format of a 3D image signal into one of various 3D formats, including a side-by-side format, a top/down format, a frame sequential format, an interlaced format, a checker box format, etc.

Meanwhile, the audio processor (not shown) in the signal processing device 170 may be configured to perform the audio processing of the demultiplexed audio signal. To this end, the audio processor (not shown) may include various decoders.

In addition, the audio processor (not shown) in the signal processing device 170 may process a base, a treble, a volume control, and the like.

The data processor (not shown) in the signal processing device 170 may be configured to perform data processing of the demultiplexed data signal. For example, when the demultiplexed data signal is a coded data signal, it may be decoded. The encoded data signal may be electronic program guide information including broadcast information, such as a start time and an end time of a broadcast program broadcasted on each channel.

Meanwhile, a block diagram of the signal processing device 170 shown in FIG. 3 is a block diagram for an embodiment of the present disclosure. Each component of the block diagram may be integrated, added, or omitted according to a specification of the signal processing device 170 actually implemented.

In particular, the frame rate converter 350 and the formatter 360 may be provided separately without being provided in the signal processing device 170, or may be provided separately as one module.

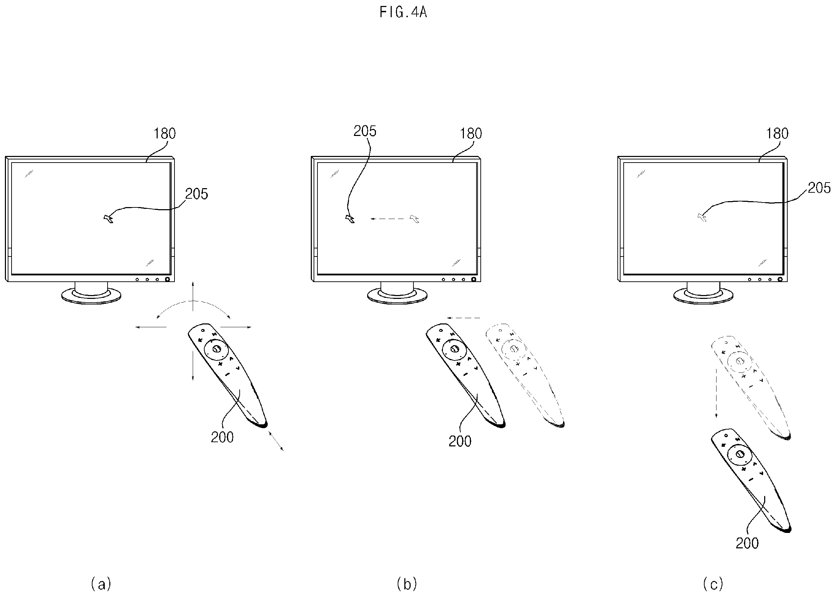

FIG. 4A is a diagram illustrating a control method of a remote controller of FIG. 2.

As shown in FIG. 4A(a), it is illustrated that a pointer 205 corresponding to the remote controller 200 is displayed on the display 180.

The user may move or rotate the remote controller 200 up and down, left and right (FIG. 4A(b)), and back and forth (FIG. 4A(c)). The pointer 205 displayed on the display 180 of the image display apparatus corresponds to the motion of the remote controller 200. Such a remote controller 200 may be referred to as a space remote controller or a 3D pointing apparatus, because the pointer 205 is moved and displayed according to the movement in a 3D space, as shown in the figure.

FIG. 4A(b) illustrates that when the user moves the remote controller 200 to the left, the pointer 205 displayed on the display 180 of the image display apparatus also moves to the left correspondingly.

Information on the motion of the remote controller 200 detected through a sensor of the remote controller 200 is transmitted to the image display apparatus. The image display apparatus may calculate the coordinate of the pointer 205 from the information on the motion of the remote controller 200. The image display apparatus may display the pointer 205 to correspond to the calculated coordinate.

FIG. 4A(c) illustrates a case where the user moves the remote controller 200 away from the display 180, while pressing a specific button of the remote controller 200. Accordingly, a selection area within the display 180 corresponding to the pointer 205 may be zoomed in so that it may be displayed to be enlarged. Meanwhile, when the user moves the remote controller 200 close to the display 180, the selection area within the display 180 corresponding to the pointer 205 may be zoomed out so that it may be displayed to be reduced. Meanwhile, when the remote controller 200 moves away from the display 180, the selection area may be zoomed out, and when the remote controller 200 approaches the display 180, the selection area may be zoomed in.

Meanwhile, when the specific button of the remote controller 200 is pressed, it is possible to exclude the recognition of vertical and lateral movement. That is, when the remote controller 200 moves away from or approaches the display 180, the up, down, left, and right movements are not recognized, and only the forward and backward movements are recognized. Only the pointer 205 is moved according to the up, down, left, and right movements of the remote controller 200 in a state where the specific button of the remote controller 200 is not pressed.

Meanwhile, the moving speed or the moving direction of the pointer 205 may correspond to the moving speed or the moving direction of the remote controller 200.

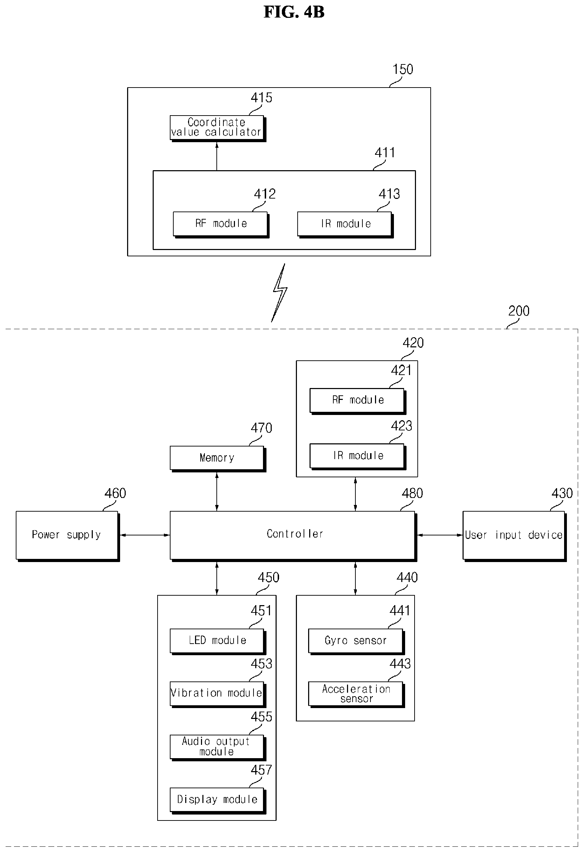

FIG. 4B is an internal block diagram of the remote controller of FIG. 2.

Referring to the figure, the remote controller 200 includes a wireless transceiver 425, a user input device 435, a sensor device 440, an output device 450, a power supply 460, a memory 470, and a controller 480.

The wireless transceiver 425 transmits/receives a signal to/from any one of the image display apparatuses according to the embodiments of the present disclosure described above. Among the image display apparatuses according to the embodiments of the present disclosure, one image display apparatus 100 will be described as an example.

In the present embodiment, the remote controller 200 may include an RF module 421 for transmitting and receiving signals to and from the image display apparatus 100 according to a RF communication standard. In addition, the remote controller 200 may include an IR module 423 for transmitting and receiving signals to and from the image display apparatus 100 according to a IR communication standard.

In the present embodiment, the remote controller 200 transmits a signal containing information on the motion of the remote controller 200 to the image display apparatus 100 through the RF module 421.

In addition, the remote controller 200 may receive the signal transmitted by the image display apparatus 100 through the RF module 421. In addition, if necessary, the remote controller 200 may transmit a command related to power on/off, channel change, volume change, and the like to the image display apparatus 100 through the IR module 423.

The user input device 435 may be implemented by a keypad, a button, a touch pad, a touch screen, or the like. The user may operate the user input device 435 to input a command related to the image display apparatus 100 to the remote controller 200. When the user input device 435 includes a hard key button, the user may input a command related to the image display apparatus 100 to the remote controller 200 through a push operation of the hard key button. When the user input device 435 includes a touch screen, the user may touch a soft key of the touch screen to input the command related to the image display apparatus 100 to the remote controller 200. In addition, the user input device 435 may include various types of input means, such as a scroll key, a jog key, etc., which may be operated by the user, and the present disclosure does not limit the scope of the present disclosure.

The sensor device 440 may include a gyro sensor 441 or an acceleration sensor 443. The gyro sensor 441 may sense information regarding the motion of the remote controller 200.

For example, the gyro sensor 441 may sense information on the operation of the remote controller 200 based on the x, y, and z axes. The acceleration sensor 443 may sense information on the moving speed of the remote controller 200. Meanwhile, a distance measuring sensor may be further provided, and Accordingly, the distance to the display 180 may be sensed.

The output device 450 may output an image or an audio signal corresponding to the operation of the user input device 435 or a signal transmitted from the image display apparatus 100. Through the output device 450, the user may recognize whether the user input device 435 is operated or whether the image display apparatus 100 is controlled.

For example, the output device 450 may include an LED module 451 that is turned on when the user input device 435 is operated or a signal is transmitted/received to/from the image display apparatus 100 through the wireless transceiver 425, a vibration module 453 for generating a vibration, an audio output module 455 for outputting an audio, or a display module 457 for outputting an image.

The power supply 460 supplies power to the remote controller 200. When the remote controller 200 is not moved for a certain time, the power supply 460 may stop the supply of power to reduce a power waste. The power supply 460 may resume power supply when a certain key provided in the remote controller 200 is operated.

The memory 470 may store various types of programs, application data, and the like necessary for the control or operation of the remote controller 200. If the remote controller 200 wirelessly transmits and receives a signal to/from the image display apparatus 100 through the RF module 421, the remote controller 200 and the image display apparatus 100 transmit and receive a signal through a certain frequency band. The controller 480 of the remote controller 200 may store information regarding a frequency band or the like for wirelessly transmitting and receiving a signal to/from the image display apparatus 100 paired with the remote controller 200 in the memory 470 and may refer to the stored information.

The controller 480 controls various matters related to the control of the remote controller 200. The controller 480 may transmit a signal corresponding to a certain key operation of the user input device 435 or a signal corresponding to the motion of the remote controller 200 sensed by the sensor device 440 to the image display apparatus 100 through the wireless transceiver 425.

The user input interface 150 of the image display apparatus 100 includes a wireless transceiver 151 that may wirelessly transmit and receive a signal to and from the remote controller 200 and a coordinate value calculator 415 that may calculate the coordinate value of a pointer corresponding to the operation of the remote controller 200.

The user input interface 150 may wirelessly transmit and receive a signal to and from the remote controller 200 through the RF module 412. In addition, the user input interface 150 may receive a signal transmitted by the remote controller 200 through the IR module 413 according to a IR communication standard.

The coordinate value calculator 415 may correct a hand shake or an error from a signal corresponding to the operation of the remote controller 200 received through the wireless transceiver 151 and calculate the coordinate value (x, y) of the pointer 205 to be displayed on the display 180.

The transmission signal of the remote controller 200 inputted to the image display apparatus 100 through the user input interface 150 is transmitted to the signal processing device 170 of the image display apparatus 100. The signal processing device 170 may determine the information on the operation of the remote controller 200 and the key operation from the signal transmitted from the remote controller 200, and, correspondingly, control the image display apparatus 100.

For another example, the remote controller 200 may calculate the pointer coordinate value corresponding to the operation and output it to the user input interface 150 of the image display apparatus 100. In this case, the user input interface 150 of the image display apparatus 100 may transmit information on the received pointer coordinate value to the signal processing device 170 without a separate correction process of hand shake or error.

For another example, unlike the figure, the coordinate value calculator 415 may be provided in the signal processing device 170, not in the user input interface 150.

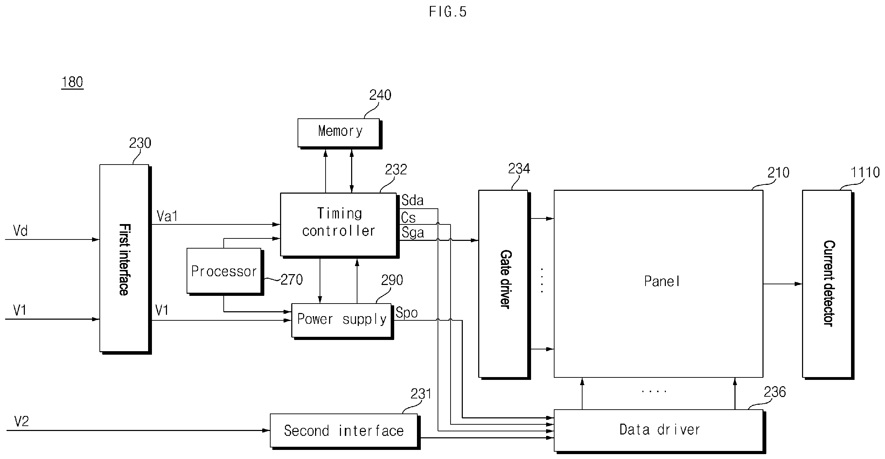

FIG. 5 is an internal block diagram of a display of FIG. 2.

Referring to FIG. 5, the display 180 may include an organic light emitting panel 210, a first interface 230, a second interface 231, a timing controller 232, a gate driver 234, a data driver 236, a memory 240, a processor 270, a power supply 290, a current detector 1110, and the like.

The display 180 receives an image signal Vd, a first DC voltage V1, and a second DC voltage V2, and may display a certain image based on the image signal Vd.

Meanwhile, the first interface 230 in the display 180 may receive the image signal Vd and the first DC voltage V1 from the signal processing device 170.

Here, the first DC voltage V1 may be used for the operation of the power supply 290 and the timing controller 232 in the display 180.

Next, the second interface 231 may receive a second DC voltage V2 from an external power supply 190. Meanwhile, the second DC voltage V2 may be input to the data driver 236 in the display 180.

The timing controller 232 may output a data driving signal Sda and a gate driving signal Sga, based on the image signal Vd.

For example, when the first interface 230 is configured to change the input image signal Vd and output the converted image signal val, the timing controller 232 may output the data driving signal Sda and the gate driving signal Sga based on the converted image signal va1.

The timing controller 232 may further receive a control signal, a vertical synchronization signal Vsync, and the like, in addition to the image signal Vd from the signal processing device 170.

In addition to the image signal Vd, based on a control signal, a vertical synchronization signal Vsync, and the like, the timing controller 232 generates a gate driving signal Sga for the operation of the gate driver 234, and a data driving signal Sda for the operation of the data driver 236.

Meanwhile, the timing controller 232 may further output a control signal Cs to the gate driver 234.

The gate driver 234 and the data driver 236 supply a scan signal and an image signal to the organic light emitting panel 210 through a gate line GL and a data line DL, respectively, according to the gate driving signal Sga and the data driving signal Sda from the timing controller 232. Accordingly, the organic light emitting panel 210 displays a certain image.

Meanwhile, the panel 210 may include an organic light emitting layer. In order to display an image, a plurality of gate lines GL and data lines DL may be disposed in a matrix form in each pixel corresponding to the organic light emitting layer.

Meanwhile, the data driver 236 may output a data signal to the organic light emitting panel 210 based on a second DC voltage V2 from the second interface 231.

The power supply 290 may supply various power supplies to the gate driver 234, the data driver 236, the timing controller 232, and the like.

The current detector 1110 may detect the current flowing in a sub-pixel of the panel 210. The detected current may be input to the processor 270 or the like, for a cumulative current calculation.

The processor 270 may be configured to perform each type of control of the display 180. For example, the processor 270 may be configured to control the gate driver 234, the data driver 236, the timing controller 232, and the like.

Meanwhile, the processor 270 may receive current information flowing in a sub-pixel of the panel 210 from the current detector 1110.

In addition, the processor 270 may calculate the accumulated current of each subpixel of the organic light emitting panel 210, based on information of current flowing through the subpixel of the organic light emitting panel 210. The calculated accumulated current may be stored in the memory 240.

Meanwhile, the processor 270 may determine as burn-in, if the accumulated current of each sub-pixel of the organic light emitting panel 210 is equal to or greater than an allowable value.

For example, if the accumulated current of each subpixel of the organic light emitting panel 210 is equal to or higher than 300,000 A, the processor 270 may determine that a corresponding subpixel is a burn-in subpixel.

Meanwhile, if the accumulated current of each subpixel of the organic light emitting panel 210 is close to an allowable value, the processor 270 may determine that a corresponding subpixel is a subpixel that is expected to burn in.

Meanwhile, the processor 270 may determine the subpixel having the largest amount of accumulated current as a subpixel that is expected to burn in, based on the current detected by the current detector 1110.

Meanwhile, based on a current detected by the current detector 1110, the processor 270 may calculate a burn-in subpixel or an expected burn-in subpixel of the organic light emitting panel 210, and may be configured to control a current, lower than an allocated current, to flow through subpixels adjacent to the calculated burn-in subpixel or the calculated expected burn-in subpixel. Accordingly, burn-in of sub-pixels adjacent to the burn-in subpixel may be extended. As a result, it is possible to extend the entire service life of the image display apparatus 100 having the organic light emitting panel 210.

Meanwhile, the processor 270 may be configured to control a current, higher than the allocated current, to flow through the calculated burn-in subpixel, such that a low current may flow through the subpixels adjacent to the calculated burn-in subpixel. Accordingly, a phenomenon of decreasing luminance may be prevented.

Meanwhile, if no burn-in occurs in the organic light emitting panel 210, the processor 270 may be configured to control a current, lower than the allocated current, to flow through subpixels adjacent to the expected burn-in subpixel which is expected to burn in. Accordingly, burn-in of sub-pixels adjacent to the expected burn-in subpixel may be extended. As a result, it is possible to extend the entire service life of the image display apparatus 100 having the organic light emitting panel 210.

Meanwhile, the processor 270 may be configured to control a data voltage, lower than an allocated data voltage, to be applied to subpixels adjacent to the calculated burn-in subpixel or the calculated expected burn-in subpixel.

Meanwhile, if no burn-in occurs in the organic light emitting panel 210, the processor 270 may be configured to control a current, lower than the allocated current, to flow through the expected burn-in subpixel as well. Accordingly, burn-in of the expected burn-in subpixel may be extended. As a result, it is possible to extend the entire service life of the image display apparatus 100 having the organic light emitting panel 210.

Meanwhile, the processor 270 may be configured to control a current having a second level, higher than a first level, to flow through a second subpixel located farther away than a first subpixel, among subpixels adjacent to the calculated burn-in subpixel or the calculated expected burn-in subpixel, such that, by controlling a higher current to flow through the second subpixel which is expected to have a longer service life, it is possible to prevent a phenomenon of decreasing luminance.

Meanwhile, the processor 270 may calculate a subpixel, having the largest amount of accumulated current in the organic light emitting panel 210, based on the current detected by the current detector 1110, and may be configured to control a current, lower than the allocated current, to flow through subpixels adjacent to the subpixel having the largest amount of accumulated current. Accordingly, the entire service life of the image display apparatus 100 having the organic light emitting panel 210 may be extended.

Meanwhile, the processor 270 may be configured to control a lower-level current to flow through subpixels located closer to the subpixel having the largest amount of accumulated current. Accordingly, the entire service life of the image display apparatus 100 having the organic light emitting panel 210 may be extended.

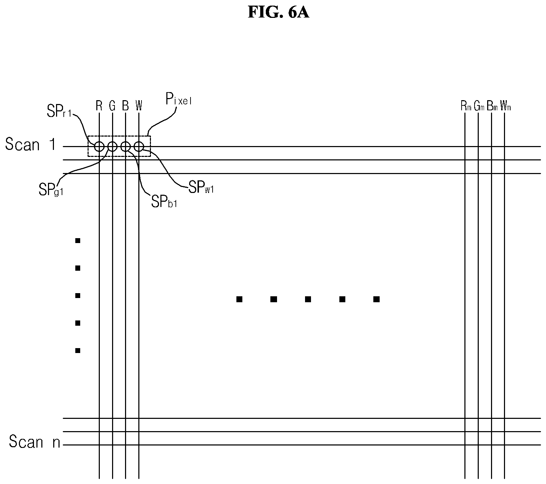

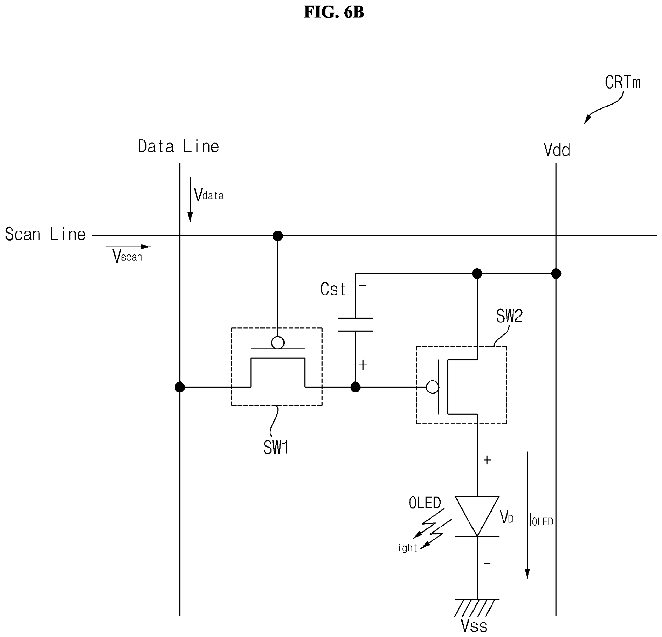

FIGS. 6A and 6B are diagrams referred to in the description of an organic light emitting panel of FIG. 5.

First, FIG. 6A is a diagram illustrating a pixel in the organic light emitting panel 210.

Referring to the figure, the organic light emitting panel 210 may include a plurality of scan lines Scan1 to Scann and a plurality of data lines R1, G1, B1, W1 to Rm, Gm, Bm, Wm intersecting the scan lines.

Meanwhile, a pixel (subpixel) is defined in an intersecting area of the scan line and the data line in the organic light emitting panel 210. In the figure, a pixel including sub-pixels SR1, SG1, SB1, and SW1 of RGBW is shown.

FIG. 6B illustrates a circuit of any one sub-pixel in the pixel of the organic light emitting panel of FIG. 6A.

Referring to the figure, an organic light emitting sub pixel circuit CRT may include, as an active type, a switching transistor SW1, a storage capacitor Cst, a drive transistor SW2, and an organic light emitting layer OLED.

The switching transistor SW1 is turned on according to the input scan signal Vdscan, as a scan line is connected to a gate terminal. When it is turned on, the input data signal Vdata is transferred to the gate terminal of a drive transistor SW2 or one end of the storage capacitor Cst.

The storage capacitor Cst is formed between the gate terminal and the source terminal of the drive transistor SW2, and stores a certain difference between a data signal level transmitted to one end of the storage capacitor Cst and a DC voltage (VDD) level transmitted to the other terminal of the storage capacitor Cst.

For example, when the data signal has a different level according to a Plume Amplitude Modulation (PAM) method, the power level stored in the storage capacitor Cst is configured to change according to the level difference of the data signal Vdata.

For another example, when the data signal has a different pulse width according to a pulse width modulation (PWM) method, the power level stored in the storage capacitor Cst is configured to change according to the pulse width difference of the data signal Vdata.

The drive transistor SW2 is turned on according to the power level stored in the storage capacitor Cst. When the drive transistor SW2 is turned on, the driving current (IOLED), which is proportional to the stored power level, flows in the organic light emitting layer OLED. Accordingly, the organic light emitting layer OLED performs a light emitting operation.

The organic light emitting layer OLED may include a light emitting layer (EML) of RGBW corresponding to a subpixel, and may include at least one of a hole injecting layer (HIL), a hole transporting layer (HTL), an electron transporting layer (ETL), and an electron injecting layer (EIL). In addition, it may include a hole blocking layer, and the like.

Meanwhile, the subpixels emit a white light in the organic light emitting layer OLED. However, in the case of green, red, and blue subpixels, a subpixel is provided with a separate color filter for color implementation. That is, in the case of green, red, and blue subpixels, each of the subpixels further includes green, red, and blue color filters. Meanwhile, since a white subpixel outputs a white light, a separate color filter is not required.

Meanwhile, in the figure, it is illustrated that a p-type MOSFET is used for a switching transistor SW1 and a drive transistor SW2, but an n-type MOSFET or other switching element, such as a JFET, IGBT, SIC, or the like are also available.

Meanwhile, the pixel is a hold-type element that continuously emits light in the organic light emitting layer OLED, after a scan signal is applied, during a unit display period, specifically, during a unit frame.

Meanwhile, light is emitted as a current flows through the organic light emitting layer OLED disposed in each subpixel illustrated in FIG. 6B.

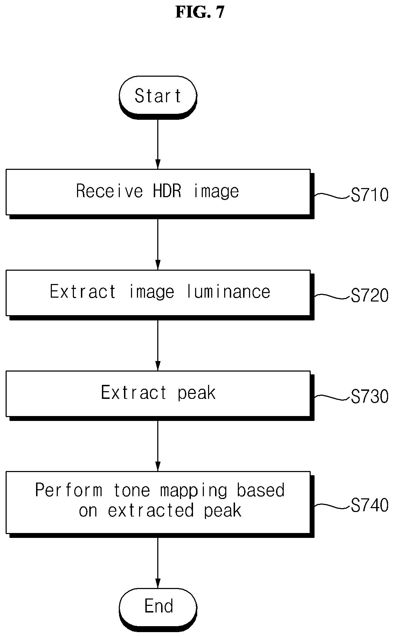

FIG. 7 is a sequential chart showing an exemplary method of operating an image display apparatus related to the present disclosure.

Referring to the drawing, the signal processing device 170 in the image display apparatus 100 related to the present disclosure may receive an input image (S710).

For example, the input image may be a high dynamic range (HDR)-based image.

Next, the signal processing device 170 may extract a luminance from the input image (S720). And, the signal processing device 170 may extract a peak luminance from the input image (S730).

Next, the signal processing device 170 may be configured to perform tone mapping based on the peak luminance (S740).

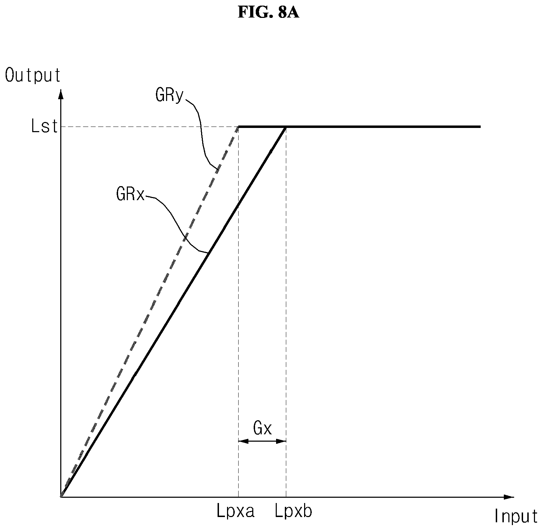

For example, the signal processing device 170 may be configured to convert the luminance of the input image based on the peak luminance and output the image with the converted luminance. This will be described with reference to FIG. 8A.

FIGS. 8A to 8C are views referred to in describing FIG. 7.

First, FIG. 8A is a view showing an example of the tone mapping in FIG. 7.

Referring to the drawing, if the peak luminance of the input image is Lpxb, the signal processing device 170 may be configured to perform control such that saturation occurs at the luminance Lpxa which is lower than the peak luminance of the input image.

That is, if the peak luminance of the input image is Lpxb, the signal processing device 170 may be configured to perform control such that luminance conversion is performed according to the tone mapping curve GRy corresponding to the luminance Lpxa, rather than the tone mapping curve GRx corresponding to the peak luminance.

The luminance conversion according to the tone mapping curve GRy corresponding to the luminance Lpxa, if performed at a gray level equal to or lower than Lpxa, achieves a higher level of luminance conversion than the luminance conversion according to the tone mapping curve GRx corresponding to the peak luminance Lpxb.

That is, the tone mapping curve GRy corresponding to the luminance Lpxa shows an enhancement in low gray level expression, as compared with the tone mapping curve GRx corresponding to the peak luminance Lpxb.

However, in the tone mapping curve GRy corresponding to the luminance Lpxa, the luminance is LPxa may be converted to the maximum luminance Lst, and the luminance is LPxa means that saturation begins at a lower gray level than in the tone mapping curve GRx corresponding to the peak luminance Lpxb, thus making the saturation region larger.

That is, the tone mapping curve GRy corresponding to the luminance Lpxa shows a reduction in the expression of mid and high gray levels, as compared with the tone mapping curve GRx corresponding to the peak luminance Lpxb.

In particular, the lower the peak luminance of the input image, the less the expression of mid and high gray levels.

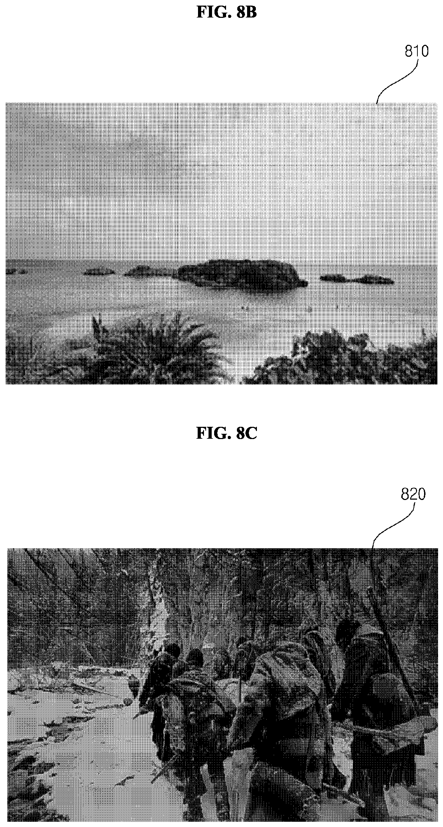

FIGS. 8B and 8C illustrate an image on which tone mapping is performed based on the method in FIG. 8A.

In particular, FIG. 8B shows an image 810 on which the tone mapping in FIG. 8A is performed when the peak luminance of the input image is a first luminance.

The image 810 in FIG. 8B may have an enhancement in low gray level expression but a reduction in mid gray level expression and high gray level expression.

Next, FIG. 8C shows an image 820 on which the tone mapping in FIG. 8A is performed when the peak luminance of the input image is a second luminance lower than the first luminance.

The image 820 in FIG. 8C may have an enhancement in low gray level expression but a reduction in mid gray level expression and high gray level expression.

In particular, the image 820 in FIG. 8C may be further reduced in mid gray level expression and high gray level expression, as compared with FIG. 8B.

In view of this, the present disclosure proposes a method for enhancing mid gray level expression and high gray level expression. This will be described with reference to FIG. 9 and the subsequent drawings.

FIG. 9 is a sequential chart showing an example of a method of operating an image display apparatus according to an embodiment of the present disclosure.

Referring to the drawing, the signal processing device 170 in the image display apparatus 100 according to an embodiment of the present disclosure may receive an input image (S910).

For example, the input image may be a high dynamic range (HDR)-based image.

Meanwhile, the signal processing device 170 may receive the HDR image from the image receiver 105 or the memory 140.

For example, the signal processing device 170 may receive an input image from the external apparatus interface 130, the tuner 110, the network interface 145, or the memory 140.

Specifically, the signal processing device 170 may receive an HDR-based input image from the external apparatus interface 130, the tuner 110, the network interface 145, or the memory 140.

Next, the signal processing device 170 may extract a luminance from the input image (S920).

For example, the signal processing device 170 may calculate the luminance distribution of the input image frame by frame and extract luminances frame by frame based on the luminance distribution.

Meanwhile, the signal processing device 170 may extract a first peak luminance from the luminances extracted from the input image (S930), and calculate or generate first tone mapping based on the first peak luminance (S940).

Meanwhile, the signal processing device 170 may extract a second peak luminance from the luminances extracted from the input image (S932), and calculate or generate second tone mapping based on the second peak luminance (S942).

Next, the signal processing device 170 may be configured to perform third tone mapping which is the final tone mapping, based on a combination of first tone mapping and second tone mapping, and output a signal corresponding to the third tone mapping (S950).

For example, the first peak luminance may be the input peak luminance of the input image, and the second luminance may correspond to a reference peak luminance.

In response to the input peak luminance of the input image being equal to or lower than the reference peak luminance, the signal processing device 170 according to an embodiment of the present disclosure may be configured to perform third tone mapping based on a combination of first tone mapping corresponding to the input peak luminance and second tone mapping corresponding to the reference peak luminance. Accordingly, grayscale expression can be enhanced. In particular, the grayscale expression of mid and high gray levels can be enhanced.

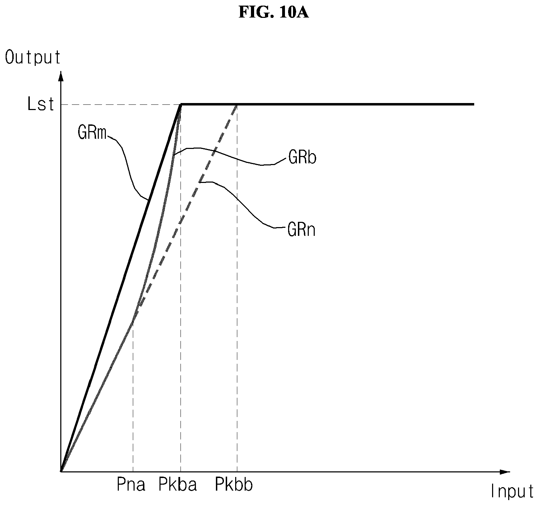

FIGS. 10A to 13 are views referred to in describing the operation method in FIG. 9.

First, FIG. 10A is a view showing an example of tone mapping when an input peak luminance Pkba of an input image is equal to or lower than a reference peak luminance Pkbb.

Referring to the drawing, if the input peak luminance Pkba of the input image is equal to or lower than the reference peak luminance Pkbb, the signal processing device 170 is configured to perform third tone mapping, based on a combination of first tone mapping corresponding to the input peak luminance Pkba and second tone mapping corresponding to the reference peak luminance Pkbb, and output a signal corresponding to the third tone mapping.

That is, if the input peak luminance Pkba of the input image is equal to or lower than the reference peak luminance Pkbb, the signal processing device 170 is configured to perform tone mapping in accordance with a third tone mapping curve Grb based on a combination of a first tone mapping curve GRm corresponding to the input peak luminance Pkba and a second tone mapping curve corresponding to the reference peak luminance Pkbb. Accordingly, grayscale expression can be enhanced. In particular, the grayscale expression of mid and high gray levels can be enhanced.

Meanwhile, when combining together the first tone mapping and the second tone mapping, the signal processing device 170 may be configured to perform control such that the ratio of the first tone mapping to the second tone mapping increases as the gray level of the input image increases. fd

That is, when combining together the first tone mapping and the second tone mapping, the signal processing device 170 may be configured to perform tone mapping in accordance with the third tone mapping curve Grb in which the ratio of the first tone mapping curve GRm to the second tone mapping curve GRn increases as the gray level of the input image increases.

Specifically, in response to the gray level of the input image being equal to or lower than a first gray level Pna, the signal processing device 170 may be configured to perform the third tone mapping based on the second tone mapping, and in response to the gray level of the input image being between the first gray level Pna and the input peak luminance Pkba, it may be configured to perform the third tone mapping based on a combination of the first tone mapping and the second tone mapping.

That is, in response to the gray level of the input image being equal to or lower than the first gray level Pna, the signal processing device 170 is configured to perform tone mapping based on the second tone mapping curve GRn, and in response to the gray level of the input image being between the first gray level Pna and the input peak luminance Pkba, it may be configured to perform tone mapping based on the third tone mapping curve GRb corresponding to the combination of the first tone mapping curve GRm and the second tone mapping curve GRn. Accordingly, grayscale expression can be enhanced.

In particular, although the third tone mapping curve GRb shows a lower level of luminance conversion than the first tone mapping curve GRm, the rate of increase in luminance conversion becomes higher between the first gray level Pna and the input peak luminance which is a saturation point.

That is, the instantaneous slope of the third tone mapping curve GRb becomes larger than the slope of the first tone mapping curve GRm, between the first gray level Pna and the input peak luminance which is a saturation point.

Accordingly, at the time of luminance conversion, the grayscale expression is enhanced, between the first gray level Pna and the input peak luminance Pkba which is a saturation point. That is, the grayscale expression of mid and high gray levels can be enhanced.

Meanwhile, the third tone mapping curve GRb shows a higher level of luminance conversion than the second tone mapping curve GRn. Accordingly, the third tone mapping curve GRb allows for an enhancement in grayscale expression as compared with the second tone mapping curve GRn.

Meanwhile, in response to the gray level of the input image being the input peak luminance Pkba, the signal processing device 170 may be configured to convert it into a set gray level Lst.

Meanwhile, the signal processing device 170 may be configured to change the set gray level based on a set input. Accordingly, grayscale expression can be enhanced.

For example, the signal processing device 170 may be configured to control the set gray level to become higher or lower than LSt, according to a set input based on the remote controller 200 or the like.

Meanwhile, the signal processing device 170 may set the set gray level based on the possible maximum luminance of the display 180.

Meanwhile, the signal processing device 170 may be configured to change the reference peak based on a set input.

For example, the signal processing device 170 may be configured to control the reference peak to become higher or lower than Pkbb, according to a set input based on the remote controller 200 or the like. Accordingly, grayscale expression can be enhanced, corresponding to the set input.

Meanwhile, if the input peak luminance Pkba of the input image is equal to or lower than the reference peak luminance Pkbb, the signal processing device 170 may be configured to increase the amount of luminance change for the third tone mapping as the difference between the input peak luminance Pkba and the reference peak luminance Pkbb increases or the input peak luminance Pkba decreases. Accordingly, grayscale expression can be enhanced, corresponding to the input peak luminance Pkba. In particular, the grayscale expression of mid and high gray levels can be enhanced.

Meanwhile, in response to the gray level of the input image being equal to or lower than the first gray level Pna, the signal processing device 170 is configured to perform the third tone mapping based on the second tone mapping, and in response to the gray level of the input image being between the first gray level Pna and the input peak luminance Pkba, it performs the third tone mapping based on a combination of the first tone mapping and the second tone mapping, and may be configured to increase the amount of luminance change for the third tone mapping as the difference between the input peak luminance Pkba and the reference peak luminance Pkbb increases or the input peak luminance Pkba decreases.

That is, in response to the gray level of the input image being equal to or lower than the first gray level Pna, the signal processing device 170 is configured to perform the third tone mapping based on the second tone mapping, and in response to the gray level of the input image being between the first gray level Pna and the input peak luminance Pkba, it performs the third tone mapping based on a combination of the first tone mapping and the second tone mapping, and may be configured to increase the amount of luminance change for the third tone mapping as the difference between the input peak luminance Pkba and the reference peak luminance Pkbb increases or the input peak luminance Pkba decreases. Accordingly, grayscale expression can be enhanced, corresponding to the input peak luminance Pkba.

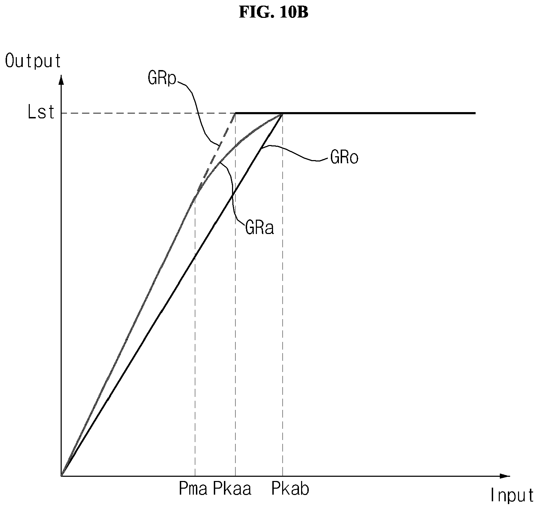

Next, FIG. 10B is a view depicting an example of tone mapping when the input peak luminance Pkab of the input image is higher than a second reference peak luminance Pkaa.

Referring to the drawing, in response to the input peak luminance Pkab of the input image being higher than a second reference peak luminance Pkaa, the signal processing device 170 is configured to perform sixth tone mapping based on a combination of fourth tone mapping corresponding to the input peak luminance Pkab and fifth tone mapping corresponding to the second reference peak luminance Pkaa, and output signal corresponding to the sixth tone mapping.

That is, in response to the input peak luminance Pkab of the input image being higher than the second reference peak luminance Pkaa, the signal processing device 170 may be configured to perform tone mapping in accordance with a sixth tone mapping curve GRa based on a combination of a fourth tone mapping curve GRo corresponding to the input peak luminance Pkab and a fifth tone mapping curve GRa corresponding to the second reference peak luminance Pkaa, and output a tone-mapped image signal. Accordingly, grayscale expression can be enhanced.

Meanwhile, when combining together the fourth tone mapping and the fifth tone mapping, the signal processing device 170 may be configured to increase the ratio of the fourth tone mapping to the fifth tone mapping as the gray level of the input image increases.

That is, when combining together the fourth tone mapping curve GRo and the fifth tone mapping curve GRp, the signal processing device 170 may be configured to perform tone mapping in accordance with the sixth tone mapping curve GRa in which the ratio of the fourth tone mapping curve GRo to the fifth tone mapping curve GRp increases as the gray level of the input image increases. Accordingly, grayscale expression can be enhanced.

Meanwhile, in response to the gray level of the input image being equal to or lower than a second gray level Pma, the signal processing device 170 may be configured to perform the sixth tone mapping based on the fifth tone mapping, and in response to the gray level of the input image being between the second gray level Pma and the input peak luminance Pkab, it may be configured to perform the sixth tone mapping based on a combination of the fourth tone mapping and the fifth tone mapping.

That is, in response to the gray level of the input image being equal to or lower than the second gray level Pma, the signal processing device 170 may be configured to perform the sixth tone mapping based on the fifth tone mapping curve GRp, and in response to the gray level of the input image being between the second gray level Pma and the input peak luminance Pkab, may be configured to perform tone mapping in accordance with the sixth tone mapping curve GRa which is a combination of the fourth tone mapping curve GRo and the fifth tone mapping curve GRp.

Meanwhile, the gray level of the input image is between the second gray level Pma and the input peak luminance Pkab, the sixth tone mapping curve GRa shows a higher level of luminance conversion than the fourth tone mapping curve GRo. Accordingly, the sixth tone mapping curve GRa can achieve an enhancement in grayscale expression as compared with the fourth tone mapping curve GRo.

Meanwhile, the saturation point Pkab of the sixth tone mapping curve GRa is larger than the saturation point Pkaa of the fifth tone mapping curve GRp, which means that the sixth tone mapping curve GRa can achieve an enhancement in grayscale expression as compared with the fifth tone mapping curve GRp.

Meanwhile, in response to the gray level of the input image being the input peak luminance Pkab, the signal processing device 170 may be configured to convert it into a set gray level Lst.

Meanwhile, the signal processing device 170 may be configured to change the set gray level based on a set input. Accordingly, grayscale expression can be enhanced.

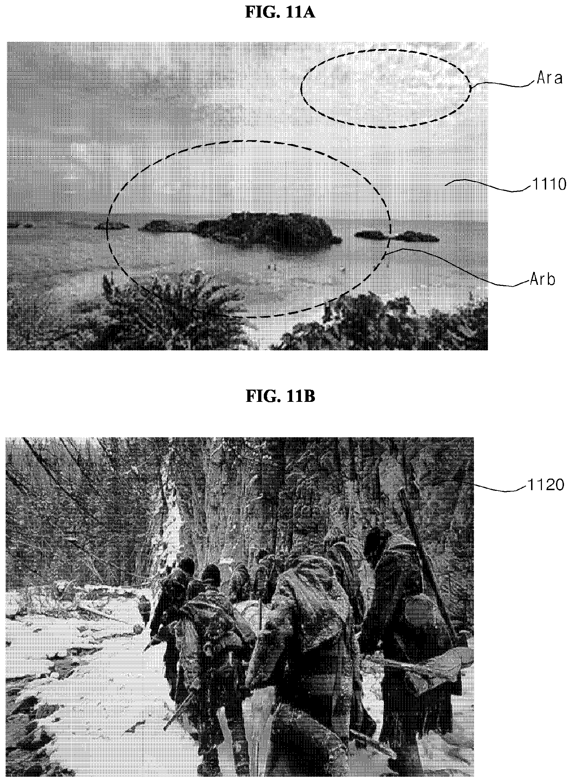

FIGS. 11A to 11B illustrate an image on which tone mapping is performed based on the method in FIG. 10A or FIG. 10B.

In particular, FIG. 11A shows an image 1110 on which the tone mapping in FIG. 10B is performed when the peak luminance of the input image is a first luminance.

The image 1110 in FIG. 11A shows an enhancement in the expression of the mid gray level areas Arb and the expression of the high gray level area Ara. Furthermore, as shown in the image 1110 in FIG. 11B, the expression of a low gray level area can be enhanced.

Next, FIG. 11B shows an image 1120 on which the tone mapping in FIG. 10A is performed when the peak luminance of the input image is a second luminance lower than the first luminance.

The image 1120 in FIG. 11B shows an enhancement in grayscale expression, as described in FIG. 10A, particularly, in mid and high gray levels.

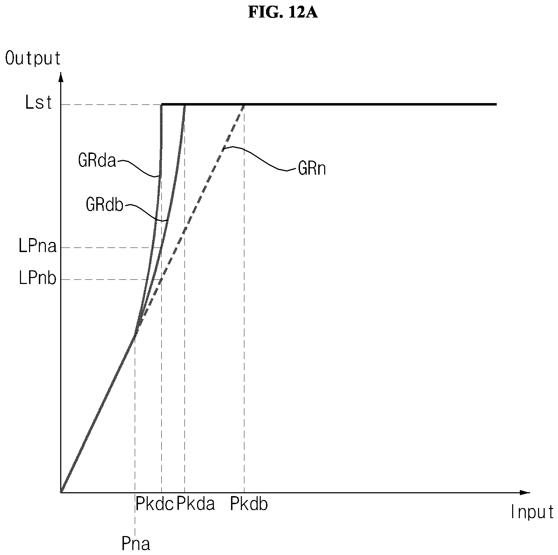

Like FIG. 10A, FIG. 12A is a view depicting various examples of tone mapping when the input peak luminance of the input image is equal to or lower than the reference peak luminance Pkdb.

Referring to the drawing, in response to the input peak luminance of the input image being equal to or lower than a reference peak luminance Pkdb, the signal processing device 170 is configured to perform third tone mapping, based on a combination of first tone mapping corresponding to the input peak luminance and second tone mapping corresponding to the reference peak luminance Pkdb, and output a signal corresponding to the third tone mapping.

In particular, the signal processing device 170 may be configured to increase the amount of luminance change for the third tone mapping as the difference between the input peak luminance and the reference peak luminance Pkdb increases or the input peak luminance decreases.

In the drawing, the input peak luminance Pkdc is lower than the reference peak luminance Pkdb, and the input peak luminance Pkda is higher than the input peak luminance Pkda.

For example, for the input peak luminance Pkdc which is lower than the reference peak luminance Pkdb, the tone mapping curve for the third tone mapping may be GRda.

For another example, for the input peak luminance Pkda which is lower than the reference peak luminance Pkdb and higher than Pkdc, the tone mapping curve for the third tone mapping may be GRdb which is closer to GRn than GRda is.

In a comparison between the tone mapping curves GRda and GRdb for the third tone mapping, the amount of luminance change is larger in GRda than in GRdb when luminance is converted.

That is, the signal processing device 170 may increase the amount of luminance change for the third tone mapping as the difference between the input peak luminance and the reference peak luminance Pkdb increases or the input peak luminance decreases.

Accordingly, grayscale expression can be enhanced, corresponding to the input peak luminance. In particular, the grayscale expression of mid and high gray levels can be enhanced.

Meanwhile, in response to the gray level of the input image being equal to or lower than the first gray level Pna, the signal processing device 170 is configured to perform the third tone mapping based on the second tone mapping, and in response to the gray level of the input image being between the first gray level Pna and the input peak luminance, it performs the third tone mapping based on a combination of the first tone mapping and the second tone mapping, and may be configured to increase the amount of luminance change for the third tone mapping as the difference between the input peak luminance and the reference peak luminance Pkdb increases or the input peak luminance decreases.

That is, in response to the gray level of the input image being equal to or lower than the first gray level Pna, the signal processing device 170 may be configured to perform the third tone mapping based on the second tone mapping curve GRn, and in response to the gray level of the input image being between the first gray level Pna and the input peak luminance, it may be configured to perform the third tone mapping based on a combination of the first tone mapping curve GRm and the second tone mapping GRn.

In this case, in response to the gray level of the input image being between the first gray level Pna and the input peak luminance, the signal processing device 170 may be configured to increase the amount of luminance change for the third tone mapping as the difference between the input peak luminance and the reference peak luminance Pkdb increases or the input peak luminance decreases. Accordingly, grayscale expression can be enhanced, corresponding to the input peak luminance.

Meanwhile, as shown in FIG. 12A, in response to receiving a first input image corresponding to a first input peak, the signal processing device 170 is configured to perform the third tone mapping to output the first input image after converting the first input peak into a set luminance, and in response to receiving a second input image corresponding to a second input peak higher than the first input peak, it performs the third tone mapping to convert the second input peak into a set luminance Lst and output the second input image after converting the first input peak into a first luminance LPna which is lower than the set luminance Lst. Accordingly, grayscale expression can be enhanced, corresponding to the input peak luminance of the input image.

Meanwhile, in response to receiving a third input image corresponding to a third input peak higher than the second input peak, the signal processing device 170 is configured to perform the third tone mapping to convert the third input peak into a set luminance Lst and output the third input image after converting the first input peak into a second luminance LPnb which is lower than the first luminance LPna. Accordingly, grayscale expression can be enhanced, corresponding to the input peak luminance of the input image.

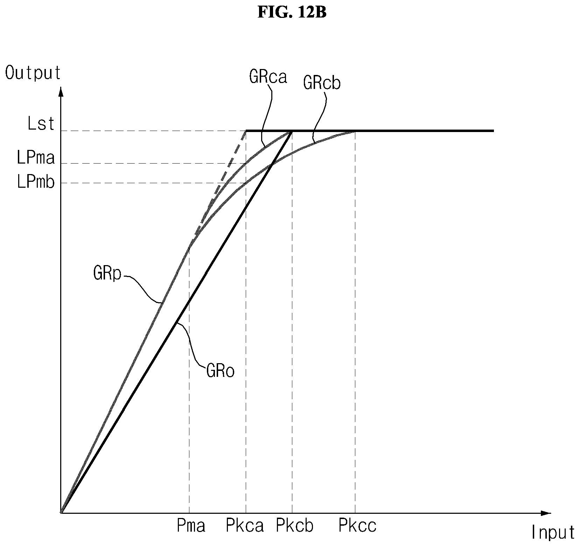

Like FIG. 10B, FIG. 12B is a view depicting various examples of tone mapping when the input peak luminance Pkba of the input image is equal to or lower than the reference peak luminance Pkbb.

Referring to the drawing, in response to the input peak luminance of the input image being equal to or lower than a second reference peak luminance Pkca, the signal processing device 170 is configured to perform sixth tone mapping, based on a combination of fourth tone mapping corresponding to the input peak luminance and fifth tone mapping corresponding to the second reference peak luminance Pkca, and output signal corresponding to the sixth tone mapping.

In particular, the signal processing device 170 may be configured to decrease the amount of luminance change for the sixth tone mapping as the difference between the input peak luminance and the second reference peak luminance Pkca increases or the input peak luminance increases.

In the drawing, the input peak luminance Pkcb is higher than the second reference peak luminance Pkca, and the input peak luminance Pkcc is higher than the input peak luminance Pkcb.

For example, for the input peak luminance Pkcb which is higher than the second reference peak luminance Pkca, the tone mapping curve for the sixth tone mapping may be GRca.

For another example, for the input peak luminance Pkcc which is higher than the second reference peak luminance Pkca and higher than Pkcb, the tone mapping curve for the sixth tone mapping may be GRcb which is closer to GRo than GRca is.

In a comparison between the tone mapping curves GRca and GRcb for the sixth tone mapping, the amount of luminance change is larger in GRca than in GRcb when luminance is converted.

That is, the signal processing device 170 may decrease the amount of luminance change for the sixth tone mapping as the difference between the input peak luminance and the second reference peak luminance Pkca increases or the input peak luminance increases.

Accordingly, grayscale expression can be enhanced, corresponding to the input peak luminance. In particular, the grayscale expression of mid and high gray levels can be enhanced.

Meanwhile, in response to the gray level of the input image being equal to or lower than the second gray level Pma, the signal processing device 170 is configured to perform the sixth tone mapping based on the fifth tone mapping, and in response to the gray level of the input image being between the second gray level Pma and the input peak luminance, it performs the sixth tone mapping based on a combination of the fourth tone mapping and the fifth tone mapping, and may be configured to decrease the amount of luminance change for the sixth tone mapping as the difference between the input peak luminance and the second reference peak luminance Pkca increases or the input peak luminance increases.

That is, in response to the gray level of the input image being equal to or lower than the second gray level Pma, the signal processing device 170 may be configured to perform the sixth tone mapping based on the fifth tone mapping curve GRp, and in response to the gray level of the input image being between the second gray level Pma and the input peak luminance, it may be configured to perform the sixth tone mapping based on a combination of the fourth tone mapping curve GRo and the fifth tone mapping GRp.

In this case, in response to the gray level of the input image being between the second gray level Pma and the input peak luminance, the signal processing device 170 may be configured to decrease the amount of luminance change for the sixth tone mapping as the difference between the input peak luminance and the second reference peak luminance Pkca increases or the input peak luminance increases. Accordingly, grayscale expression can be enhanced, corresponding to the input peak luminance.

Meanwhile, as shown in FIG. 12B, in response to receiving a fourth input image corresponding to a fourth input peak, the signal processing device 170 is configured to perform the sixth tone mapping to output the fourth input image after converting the fourth input peak into a set luminance, and in response to receiving a fifth input image corresponding to a fifth input peak higher than the fourth input peak, it performs the sixth tone mapping to convert the fifth input peak into a set luminance Lst and output the fifth input image after converting the fourth input peak into a third luminance LPma which is lower than the set luminance Lst. Accordingly, grayscale expression can be enhanced, corresponding to the input peak luminance of the input image.

Meanwhile, in response to receiving a sixth input image corresponding to a sixth input peak higher than the fifth input peak, the signal processing device 170 is configured to perform the sixth tone mapping to convert the sixth input peak into the set luminance Lst and output the sixth input image after converting the fourth input peak into a fourth luminance LPmb which is lower than the third luminance LPma. Accordingly, grayscale expression can be enhanced, corresponding to the input peak luminance of the input image.

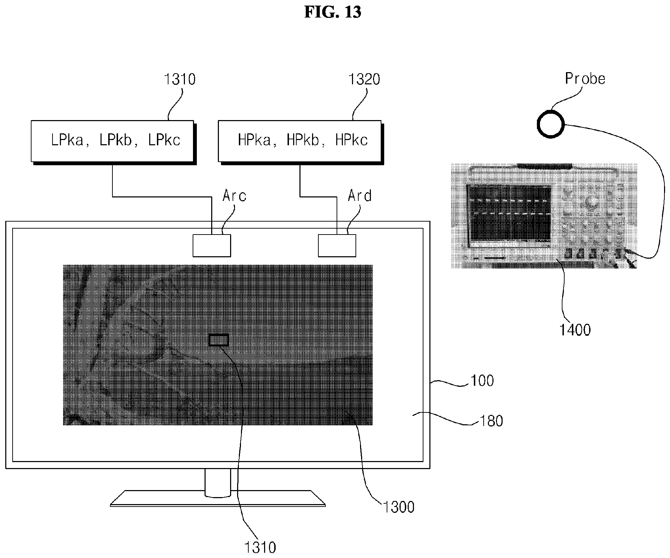

FIG. 13 is a view illustrating that an image is displayed based on various patterns and luminance is measured using a probe of a luminance measuring device 1400.

Referring to the drawing, a first pattern output part 1310 in the signal processing device 170 may sequentially output patterns having luminances LPka, LPkb, and LPkc in a first area Arc.

For example, at a first time, the signal processing device 170 may be configured to perform third tone mapping on a first pattern image corresponding to a first input peak LPka and output the first pattern image after converting the first input peak into a set luminance.

Meanwhile, at a second time, the signal processing device 170 may be configured to perform third tone mapping on a second pattern image corresponding to a second input peak LPkb which is higher than the first input peak LPka to convert the second input peak into a set luminance and output the second pattern image after converting the first input peak into a first luminance lower than the set luminance. Accordingly, grayscale expression can be enhanced, corresponding to the input peak luminance of the input image.

Meanwhile, at a third time, the signal processing device 170 may be configured to perform third tone mapping on a third pattern image corresponding to a third input peak LPkc which is higher than the second input peak LPkb to convert the third input peak into a set luminance and output the third pattern image after converting the first input peak into a second luminance lower than the first luminance. Accordingly, grayscale expression can be enhanced, corresponding to the input peak luminance of the input image.

Meanwhile, a second pattern output part 1320 in the signal processing device 170 may sequentially output patterns having luminances HPka, HPkb, and HPkc in a second area Ard.

For example, at a fourth time, the signal processing device 170 may be configured to perform sixth tone mapping on a fourth pattern image corresponding to a fourth input peak HPka and output the fourth pattern image after converting the fourth input peak into a set luminance.

Meanwhile, at a fifth time, the signal processing device 170 may be configured to perform sixth tone mapping on a fifth pattern image corresponding to a fifth input peak HPka which is higher than the fourth input peak HPka to convert the second input peak into a set luminance and output the fifth pattern image after converting the fourth input peak into a third luminance lower than the set luminance. Accordingly, grayscale expression can be enhanced, corresponding to the input peak luminance of the input image.

Meanwhile, at a sixth time, the signal processing device 170 may be configured to perform sixth tone mapping on a sixth pattern image corresponding to a sixth input peak HPkc which is higher than the fifth input peak HPkb to convert the sixth input peak into a set luminance and output the sixth pattern image after converting the fourth input peak into a fourth luminance lower than the third luminance. Accordingly, grayscale expression can be enhanced, corresponding to the input peak luminance of the input image.

As described above, an image display apparatus according to an embodiment of the present disclosure comprise: a display; and a signal processing device to output an image signal to the display, wherein, in response to an input peak luminance of an input image being equal to or lower than a reference peak luminance, the signal processing device is configured to perform third tone mapping, based on a combination of first tone mapping corresponding to the input peak luminance and second tone mapping corresponding to the reference peak luminance, and output a signal corresponding to the third tone mapping. Accordingly, grayscale expression can be enhanced. In particular, the grayscale expression of mid and high gray levels can be enhanced.

Meanwhile, when combining together the first tone mapping and the second tone mapping, the signal processing device may be configured to increase the ratio of the first tone mapping to the second tone mapping as the gray level of the input image increases. Accordingly, grayscale expression can be enhanced as the gray level of the input image increases

Meanwhile, in response to the gray level of the input image being equal to or lower than a first gray level, the signal processing device may be configured to perform the third tone mapping based on the second tone mapping, and in response to the gray level of the input image being between the first gray level and the input peak luminance, the signal processing device may be configured to perform the third tone mapping based on a combination of the first tone mapping and the second tone mapping. Accordingly, grayscale expression can be enhanced.

Meanwhile, in response to the gray level of the input image being the input peak luminance, the signal processing device may be configured to convert the gray level into a set gray level. Accordingly, grayscale expression can be enhanced. In particular, the grayscale expression of mid and high gray levels can be enhanced.

Meanwhile, the signal processing device may be configured to change the set gray level based on a set input. Accordingly, grayscale expression can be enhanced corresponding to the set input.

Meanwhile, the signal processing device may be configured to change the reference peak based on a set input. Accordingly, grayscale expression can be enhanced corresponding to the set input.

Meanwhile, the signal processing device may be configured to increase the amount of luminance change for the third tone mapping as the difference between the input peak luminance and the reference peak luminance increases or the input peak luminance decreases in a state in which the input peak luminance of the input image is equal to or lower than the reference peak luminance. Accordingly, grayscale expression can be enhanced corresponding to the input peak luminance. In particular, the grayscale expression of mid and high gray levels can be enhanced.

Meanwhile, in response to the gray level of the input image being equal to or lower than a first gray level, the signal processing device may be configured to perform the third tone mapping based on the second tone mapping, and in response to the gray level of the input image being between the first gray level and the input peak luminance, the signal processing device may be configured to perform the third tone mapping based on a combination of the first tone mapping and the second tone mapping, and increase the amount of luminance change for the third tone mapping as the difference between the input peak luminance and the reference peak luminance increases or the input peak luminance decreases. Accordingly, grayscale expression can be enhanced corresponding to the input peak luminance.

Meanwhile, in response to the input peak luminance of the input image being higher than a second reference peak luminance, the signal processing device may be configured to perform sixth tone mapping based on a combination of fourth tone mapping corresponding to the input peak luminance and fifth tone mapping corresponding to the second reference peak luminance, and output signal corresponding to the sixth tone mapping. Accordingly, grayscale expression can be enhanced.

Meanwhile, when combining together the fourth tone mapping and the fifth tone mapping, the signal processing device may be configured to increase the ratio of the fourth tone mapping to the fifth tone mapping as the gray level of the input image increases. Accordingly, grayscale expression can be enhanced corresponding to the input peak luminance.

Meanwhile, in response to the gray level of the input image being equal to or lower than a second gray level, the signal processing device may be configured to perform the sixth tone mapping based on the fifth tone mapping, and in response to the gray level of the input image being between the second gray level and the input peak luminance, the signal processing device may be configured to perform the sixth tone mapping based a combination of the fourth tone mapping and the fifth tone mapping. Accordingly, the grayscale expression of mid and high gray levels can be enhanced.

Meanwhile, the signal processing device may be configured to decrease the amount of luminance change for the sixth tone mapping as the difference between the input peak luminance and the second reference peak luminance increases or the input peak luminance increases in a state in which the input peak luminance of the input image is higher than the reference peak luminance. Accordingly, grayscale expression can be enhanced corresponding to the input peak luminance. In particular, the grayscale expression of mid and high gray levels can be enhanced.

Meanwhile, in response to the gray level of the input image being equal to or lower than a second gray level, the signal processing device may be configured to perform the sixth tone mapping based on the fifth tone mapping, and in response to the gray level of the input image being between the second gray level and the input peak luminance, the signal processing device may be configured to perform the sixth tone mapping based on a combination of the fourth tone mapping and the fifth tone mapping, and decrease the amount of luminance change for the sixth tone mapping as the difference between the input peak luminance and the second reference peak luminance increases or the input peak luminance increases. Accordingly, the grayscale expression of mid and high gray levels can be enhanced corresponding to the input peak luminance.

Meanwhile, in response to receiving a first input image corresponding to a first input peak, the signal processing device is configured to perform the third tone mapping to output the first input image after converting the first input peak into a set luminance, and in response to receiving a second input image corresponding to a second input peak higher than the first input peak, the signal processing device may be configured to perform the third tone mapping to convert the second input peak into a set luminance and output the second input image after converting the first input peak into a first luminance lower than the set luminance. Accordingly, grayscale expression can be enhanced corresponding to the input peak of the input image.

Meanwhile, in response to receiving a third input image corresponding to a third input peak higher than the second input peak, the signal processing device may be configured to perform the third tone mapping to convert the third input peak into a set luminance and output the third input image after converting the first input peak into a second luminance lower than the first luminance. Accordingly, grayscale expression can be enhanced corresponding to the input peak of the input image.

Meanwhile, in response to receiving a fourth input image corresponding to a fourth input peak, the signal processing device may be configured to perform the sixth tone mapping to output the fourth input image after converting the fourth input peak into a set luminance, and in response to receiving a fifth input image corresponding to a fifth input peak higher than the fourth input peak, the signal processing device may be configured to perform the sixth tone mapping to convert the fifth input peak into a set luminance and output the fifth input image after converting the fourth input peak into a third luminance lower than the set luminance. Accordingly, grayscale expression can be enhanced corresponding to the input peak of the input image.

Meanwhile, in response to receiving a sixth input image corresponding to a sixth input peak higher than the fifth input peak, the signal processing device is configured to perform the sixth tone mapping to convert the sixth input peak into the set luminance and output the sixth input image after converting the fourth input peak into a fourth luminance lower than the third luminance. Accordingly, grayscale expression can be enhanced corresponding to the input peak of the input image.

An image display apparatus according to another embodiment of the present disclosure comprises: a display; and a signal processing device to output an image signal to the display, wherein, in response to an input peak luminance of an input image being higher than a reference peak luminance, the signal processing device is configured to perform third tone mapping, based on a combination of first tone mapping corresponding to the input peak luminance and second tone mapping corresponding to the reference peak luminance, and output a signal corresponding to the third tone mapping. Accordingly, grayscale expression can be enhanced. In particular, the grayscale expression of mid and high gray levels can be enhanced.

An image display apparatus according to further another embodiment of the present disclosure comprises: a display; and a signal processing device to output an image signal to the display, wherein, in response to receiving a first input image corresponding to a first input peak, the signal processing device is configured to perform tone mapping to output the first input image after converting the first input peak into a set luminance, and in response to receiving a second input image corresponding to a second input peak higher than the first input peak, the signal processing device is configured to perform the tone mapping to convert the second input peak into a set luminance and output the second input image after converting the first input peak into a first luminance lower than the set luminance. Accordingly, grayscale expression can be enhanced. In particular, the grayscale expression of mid and high gray levels can be enhanced.

Meanwhile, in response to receiving a third input image corresponding to a third input peak higher than the second input peak, the signal processing device may be configured to perform the third tone mapping to convert the third input peak into a set luminance and output the third input image after converting the first input peak into a second luminance lower than the first luminance. Accordingly, grayscale expression can be enhanced. In particular, the grayscale expression of mid and high gray levels can be enhanced.

While the disclosure has been described with reference to the embodiments, the disclosure is not limited to the above described specific embodiments, and it will be understood by those skilled in the related art that various modifications and variations may be made without departing from the scope of the disclosure as defined by the appended claims, as well as these modifications and variations should not be understood separately from the technical spirit and prospect of the disclosure.

## Claims

1. An image display apparatus (100) comprising:
a display (180); and
a signal processing device (170) to output an image signal to the display (180);
wherein, in response to an input peak luminance of an input image being equal to or lower than a reference peak luminance, the signal processing device (170) is configured to perform third tone mapping, based on a combination of first tone mapping corresponding to the input peak luminance and second tone mapping corresponding to the reference peak luminance, and output a signal corresponding to the third tone mapping.

2. The image display apparatus of claim 1, wherein, when combining together the first tone mapping and the second tone mapping, the signal processing device (170) is configured to increase the ratio of the first tone mapping to the second tone mapping as the gray level of the input image increases.

3. The image display apparatus of any one of claims 1 to 2, wherein, in response to the gray level of the input image being equal to or lower than a first gray level, the signal processing device (170) is configured to perform the third tone mapping based on the second tone mapping, and
wherein, in response to the gray level of the input image being between the first gray level and the input peak luminance, the signal processing device (170) is configured to perform the third tone mapping based on a combination of the first tone mapping and the second tone mapping.

4. The image display apparatus of any one of claims 1 to 3, wherein, in response to the gray level of the input image being the input peak luminance, the signal processing device (170) is configured to change the gray level into a set gray level.

5. The image display apparatus of any one of claims 1 to 4, wherein the signal processing device (170) is configured to increase the amount of luminance change for the third tone mapping as the difference between the input peak luminance and the reference peak luminance increases or the input peak luminance decreases in a state in which the input peak luminance of the input image is equal to or lower than the reference peak luminance.

6. The image display apparatus of claim 1, wherein, in response to the gray level of the input image being equal to or lower than a first gray level, the signal processing device (170) is configured to perform the third tone mapping based on the second tone mapping, and
wherein, in response to the gray level of the input image being between the first gray level and the input peak luminance, the signal processing device (170) is configured to perform the third tone mapping based on a combination of the first tone mapping and the second tone mapping, and increase the amount of luminance change for the third tone mapping as the difference between the input peak luminance and the reference peak luminance increases or the input peak luminance decreases.

7. The image display apparatus of any one of claims 1 to 6, wherein, in response to the input peak luminance of the input image being higher than a second reference peak luminance, the signal processing device (170) is configured to perform sixth tone mapping based on a combination of fourth tone mapping corresponding to the input peak luminance and fifth tone mapping corresponding to the second reference peak luminance, and output signal corresponding to the sixth tone mapping.

8. The image display apparatus of claim 7, wherein, when combining together the fourth tone mapping and the fifth tone mapping, the signal processing device (170) is configured to increase the ratio of the fourth tone mapping to the fifth tone mapping as the gray level of the input image increases.

9. The image display apparatus of claim 7, wherein, in response to the gray level of the input image being equal to or lower than a second gray level, the signal processing device (170) is configured to perform the sixth tone mapping based on the fifth tone mapping, and
wherein, in response to the gray level of the input image being between the second gray level and the input peak luminance, the signal processing device (170) is configured to perform the sixth tone mapping based a combination of the fourth tone mapping and the fifth tone mapping.

10. The image display apparatus of claim 7, wherein the signal processing device (170) is configured to decrease the amount of luminance change for the sixth tone mapping as the difference between the input peak luminance and the second reference peak luminance increases or the input peak luminance increases in a state in which the input peak luminance of the input image is higher than the reference peak luminance.

11. The image display apparatus of claim 7, wherein, in response to the gray level of the input image being equal to or lower than a second gray level, the signal processing device (170) is configured to perform the sixth tone mapping based on the fifth tone mapping, and
wherein, in response to the gray level of the input image being between the second gray level and the input peak luminance, the signal processing device (170) is configured to perform the sixth tone mapping based on a combination of the fourth tone mapping and the fifth tone mapping, and decrease the amount of luminance change for the sixth tone mapping as the difference between the input peak luminance and the second reference peak luminance increases or the input peak luminance increases.

12. The image display apparatus of any one of claims 1 to 11, wherein, in response to receiving a first input image corresponding to a first input peak, the signal processing device (170) is configured to perform the third tone mapping to output the first input image after converting the first input peak into a set luminance, and
wherein, in response to receiving a second input image corresponding to a second input peak higher than the first input peak, the signal processing device (170) is configured to perform the third tone mapping to convert the second input peak into a set luminance and output the second input image after converting the first input peak into a first luminance lower than the set luminance.

13. The image display apparatus of claim 12, wherein, in response to receiving a third input image corresponding to a third input peak higher than the second input peak, the signal processing device (170) is configured to perform the third tone mapping to convert the third input peak into a set luminance and output the third input image after converting the first input peak into a second luminance lower than the first luminance.

14. The image display apparatus of claim 7, wherein, in response to receiving a fourth input image corresponding to a fourth input peak, the signal processing device (170) is configured to perform the sixth tone mapping to output the fourth input image after converting the fourth input peak into a set luminance, and
wherein, in response to receiving a fifth input image corresponding to a fifth input peak higher than the fourth input peak, the signal processing device (170) is configured to perform the sixth tone mapping to convert the fifth input peak into a set luminance and output the fifth input image after converting the fourth input peak into a third luminance lower than the set luminance.

15. The image display apparatus of claim 14, wherein, in response to receiving a sixth input image corresponding to a sixth input peak higher than the fifth input peak, the signal processing device (170) is configured to perform the sixth tone mapping to convert the sixth input peak into the set luminance and output the sixth input image after converting the fourth input peak into a fourth luminance lower than the third luminance.
